(19) Europäisches Patentamt
European Patent Office
Office européen des brevets

(11) Veröffentlichungsnummer: **0 244 894**
**B1**

(12) # EUROPÄISCHE PATENTSCHRIFT

(45) Veröffentlichungstag der Patentschrift: **02.11.89**

(51) Int. Cl.⁴: **C22B 26/10**, C22B 5/04

(21) Anmeldenummer: **87200681.2**

(22) Anmeldetag: **11.04.87**

(54) **Verfahren zur Herstellung von Alkalimetallen.**

(30) Priorität: **30.04.86 DE 3614698**

(43) Veröffentlichungstag der Anmeldung:
**11.11.87 Patentblatt 87/46**

(45) Bekanntmachung des Hinweises auf die Patenterteilung:
**02.11.89 Patentblatt 89/44**

(84) Benannte Vertragsstaaten:
**AT BE CH DE ES FR GB IT LI NL SE**

(56) Entgegenhaltungen:
**DE-A- 1 932 129**
**FR-A- 1 551 730**
**GB-A- 719 835**
**US-A- 2 177 412**
**US-A- 2 480 655**
**US-A- 2 687 951**
**US-A- 2 716 057**
**US-A- 3 216 947**
**US-A- 3 428 448**

(73) Patentinhaber: **METALLGESELLSCHAFT AG, Reuterweg 14 Postfach 3724, D-6000 Frankfurt/M.1(DE)**

(72) Erfinder: **Krennrich, Otmar, Rotbornstrasse 3, D-6370 Oberursel(DE)**
Erfinder: **Brendel, Gottfried, Dr., Mariannenweg 12, D-6380 Bad Homburg(DE)**
Erfinder: **Weiss, Wilfried, Dr., Auf der Entenweide 11, D-6370 Oberursel(DE)**

(74) Vertreter: **Rieger, Harald, Dr., Reuterweg 14, D-6000 Frankfurt am Main(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung von Alkalimetallen durch Reduzieren der Alkalimetallverbindungen mit metallischem Magnesium.

Die thermochemische Herstellung von insbesondere metallischem Kalium ist bekannt (DE-AS 19 32 129). Als Ausgangsverbindungen werden hierfür vor allem Kaliumhalogenide, Kaliumcarbonat oder Kaliumhydroxid und als Reduktionsmittel Kohle, Calciumcarbid, Aluminium, Magnesium, Silicium oder Ferrosilicium eingesetzt. Nach dem aus US-PS 2 480 655 bekannten Verfahren wird metallisches Kalium über die Reduktion von geschmolzenen Kaliumverbindungen mittels metallischem Natrium gewonnen. Bei derartigen Verfahren werden hohe und im Bereich von 500 bis 1300°C liegende Temperaturen benötigt, gegebenenfalls sind auch Arbeitsweisen unter vermindertem Druck erforderlich. Abgesehen vom hohen Energiebedarf solcher Verfahren mit Schmelzprozessen erfordert auch die apparative Ausrüstung besondere Werkstoffe, wie Edelstähle.

Der Erfindung liegt die Aufgabe zugrunde, ein einfach durchzuführendes Verfahren zur Herstellung von Alkalimetallen bereitzustellen, das ohne Schmelzphasenbedingungen arbeitet.

Zur Lösung dieser Aufgabe geht die Erfindung aus von einem Verfahren zur Herstellung von Alkalimetall durch Reduktion von Alkaliverbindungen mit metallischem Reduktionsmittel.

Bei einem Verfahren der genannten Art besteht die Erfindung darin, daß die Reduktion mit zerteiltem Magnesium in einem bezüglich Alkalimetall inerten organischen Lösungsmittel durchgeführt wird.

Als organische Lösungsmittel, die bezüglich des Alkalimetalls nicht reaktiv sind, werden gesättigte aliphatische oder cycloaliphatische Kohlenwasserstoffe verstanden, die insbesondere 8 bis 20 kettenförmig oder cyclisch verbundene Kohlenstoffatome aufweisen, z.B. Decan, Undecan, Dodecan, Dekahydronaphthalin, ferner handelsübliche Spezialbenzine mit Siedebereichen zwischen 150 und 250°C, wie Shellsol T, Shellsol D 70 Kerosin. Diese Spezialbenzine haben beispielsweise eine Zusammensetzung von 5 % Naphthene, 3 % n-Paraffine, 92 % iso-Paraffine bzw. eine Zusammensetzung von 40 % Naphthene, 30 % n-Paraffine, 30 % iso-Paraffine.

Als metallisches Reduktionsmittel wird Magnesium verwendet. Zweckmäßigerweise wird das Magnesium in granulierter oder pulverisierter Form, insbesondere in Form von Drehspänen, eingesetzt. Eine ggf. durch größeren Wassergehalt des Alkalimetallhydroxids erhöhte Reaktivität des Systems ist bei der Auswahl der Korngröße bzw. Feinheit des Magnesiummetalls zu berücksichtigen.

Ausgangsverbindungen für das zu gewinnende Alkalimetall, wie Natrium, Kalium, Rubidium oder Caesium, sind insbesondere dessen Hydroxid oder Alkoxid.

Die Reduktionen dieser Alkalimetallverbindungen zum Metall können durch folgende Reaktionsgleichungen beschrieben werden, z.B.:

$$KOH + Mg \xrightarrow[KW]{ROH} K + MgO + 1/2\ H_2$$

$$2\ KOR + Mg \xrightarrow{KW} 2\ K + Mg(OR)_2$$

Bei wasserhaltigem Hydroxid erfolgt zunächst die - bei höherem Wassergeschalt heftige - Dehydratisierung durch das Magnesium unter Bildung von Wasserstoff und Magnesiumhydroxid bzw. - bei höheren Temperaturen - von Magnesiumoxid.

Die Reaktion wird im allgemeinen im Temperaturbereich von von 100 bis 300°C, vorzugsweise von 150 bis 250°C, unter normalem oder erhöhtem Druck vorgenommen. Die Reaktionszeit beträgt etwa 1 bis 8 Stunden. Zur Durchführung des erfindungsgemäßen Verfahrens werden die Ausgangskomponenten, wie Kaliumhydroxid oder Kaliumalkoxid, zusammen mit zerteiltem Magnesium, z.B. Magnesiumspäne, in einen ggf. druckfest ausgelegten Reaktor gegeben, worin das organische inerte Lösungsmittel, wie Kerosin, vorgelegt ist. Der Reaktor ist mit Heizung, Rührwerk, Rückflußkühler sowie Inertgasversorgung ausgerüstet.

In den Fällen des Einsatzes von Alkalihydroxiden hat es sich als zweckmäßig herausgestellt, die Reaktion durch Zusatz von Alkohol bzw. Alkoholat zu beschleunigen. Geeignete Reaktionsbeschleuniger sind vorzugsweise Alkohole mit 3 bis 8 C-Atomen, z.B. Propanol, Butanol, Pentanol, insbesondere tertiäres Butanol oder tertiäres Pentanol bzw. deren entsprechende Alkalimetallalkoholate.

Das Reaktionsgemisch ist in dem inerten Lösungsmittel dispergiert und die Dispersion hat einen Feststoffgehalt von etwa 20 bis 25 Gew.-%. Die Alkalimetallverbindungen und das metallische Magnesium werden in äquimolaren Mengen eingesetzt. Sofern ein Reaktionsbeschleuniger verwendet wird, beträgt dessen Menge etwa 5 bis 10 Mol-% der Menge des Alkalihydroxids.

Die Abtrennung des gewonnenen Alkalimetalls kann nach an sich bekannten Verfahren vorgenommen werden, wie Destillation, Filtration oder durch Schwerkrafttrennung mittels Lösungsmittels geeigneter Dichte.

Die Vorteile des erfindungsgemäßen Verfahrens liegen in der leichten Herstellung der Alkalimetalle bei relativ niedrigen Temperaturen, der vereinfachten Ausbildung des Reaktors auch hinsichtlich der zu verwendenden Werkstoffe sowie der Vermeidung von Korrosionsproblemen.

Die Erfindung wird anhand der nachstehenden Beispiele näher und beispielhaft erläutert.

Beispiel 1

Herstellung von metallischem Kalium aus Kaliumhydroxid

In diesem Beispiel wird anhand einer allgemeinen und für die Herstellung anderer Alkalimetalle zutreffenden Arbeitsweise und Versuchsanordnung die Herstellung von metallischem Kalium beschrieben.

In einem 1 Liter-4-Halskolben werden 31,1 g (1,278 Mol) Magnesiumspäne, 61,2 g Kaliumhydroxid (1,000 Mol KOH, 0,278 Mol $H_2O$) und 500 ml Shellsol D 70 vorgelegt und zum Sieden erhitzt. Bei ca. 100 bis 130°C beginnt eine heftige $H_2$-Entwicklung (max. etwa 1 1/min). Nach 1 h haben sich 278 mmol $H_2$ entwickelt, wobei man gegen Ende eine deutliche Abnahme der Gasentwicklung bemerkt.

In der Siedehitze (etwa 200°C) werden nun 6,0 g tert.-Butylalkohol (80 mmol), gelöst in 6 g Shellsol D 70, langsam innerhalb einer halben Stunde zugetropft. Die $H_2$-Entwicklung beträgt 80 mmol. Unter stetigem Sieden setzt sich die $H_2$-Entwicklung (insgesamt 460 mmol) und Kalium-Bildung fort und ist nach ca. 4 h beendet.

Unter Rühren läßt man bis 70°C abkühlen und läßt unter Argonatmosphäre bei abgestelltem Rührwerk erkalten. In der erkalteten farblosen Reaktionslösung haben sich weißes Magnesiumoxid und ein Regulus von metallischem Kalium am Boden abgesetzt. Das Lösungsmittel wird anschließend im Vakuum (p = 1 Torr =133,3 Pa) abdestilliert oder abfiltriert.

Der Rückstand wird sodann bei Raumtemperatur mit 200 ml 1,4-Dioxan versetzt und auf 60 bis 100°C erwärmt. Das Kalium schwimmt hierbei auf und wird durch Rühren zu Kugeln geeigneter Größe zerteilt. Hat man die gewünschte Kugelform erreicht, stellt man den Rührer ab und läßt erkalten. Das Reaktionsgemisch wird nun in ein Scheidegefäß überführt, wobei mit Dioxan nachgespült wird. Nach Absitzen des Magnesiumoxids wird durch Auslauf das Kalium vom MgO und Dioxan abgetrennt. Das Kalium wird auf einem Filterkörper sodann geschmolzen und unter leichtem Vakuum in einen Kolben gesaugt. Man erhält das silbrigglänzende Kalium in einer Ausbeute von 34,0 g, entsprechend 87 % der Theorie.

Die Dioxan/MgO-Suspension wird bei Raumtemperatur über eine Fritte filtriert; der Rückstand (MgO) bei Raumtemperatur im Vakuum getrockent. Das Dioxan wird aus dem Filtrat durch Destillation quantitativ zurückgewonnen; als Rückstand verbleibt Kalium-tert.-butylat, das durch die Umsetzung des tert.-Butylalkohols entstanden ist.

Beispiel 2

Herstellung von metallischem Natrium aus Natriumhydroxid

In dem Reaktor werden gemäß Beispiel 1 in 314 g Shellsol D 70 40,9 g (1,023 Mol) Natriumhydroxid, 25,2 g (1,037 Mol) Magnesiumspäne und 9,7 g (0,101 Mol) Natrium-tert.-butylat bei Siedetemperatur (210°C) während 15 h unter Rühren umgesetzt. Das Lösungsmittel wird anschließend im Vakuum abdestilliert (120°C, 20 mbar =2000 Pa) und hierbei quantitativ zurückgewonnen. Der Rückstand wird mit 350 g Dioxan versetzt und auf Siedetemperatur unter Rühren erhitzt. Nach Erreichen der gewünschten Teilchengröße des Natriums wird der Rührer abgestellt, die Dispersion erkalten gelassen und das aufschwimmende Natriummetall abgeschöpft. Ausbeute 19,8 g (84 % der Theorie).

Beispiel 3

Herstellung von metallischem Kalium aus Kaliumalkoholat

In dem Reaktor gemäß Beispiel 1 wird ein Gemisch aus 74,8 g Kalium-tert.-amylat (0,59 Mol), 7,3 g Magnesiumspänen (0,3 Mol) und 400 ml Dekalin während 3 h auf 150°C unter Rühren erhitzt. Aus dem erkalteten Reaktionsgemisch wird ein Regulus von 15,1 g (0,38 Mol) Kalium gewonnen. Ausbeute 65,5 %.

Beispiel 4

Herstellung von metallischem Natrium aus Natriumalkoholat

In dem Reaktor gemäß Beispiel 1 wird ein Gemisch aus 19,24 g Natrium-t-butylat (200 mmol), 2,48 g Magnesiumspänen (102 mmol) und 150 ml Shellsol D 70 1,5 h unter Rühren und unter Rückflußbedingungen umgesetzt.

Aus dem erkalteten Reaktionsgemisch wird ein mit Magnesium behafteter Natriumregulus entnommen und zur Reinigung bei 100°C über eine Fritte filtriert. Natrium-Ausbeute: 1,2 g (25 % der Theorie).

Beispiel 5

Herstellung von metallischem Caesium aus Caesiumhydroxid

In dem Reaktor und in der Arbeitsweise gemäß Beispiel 1 wird ein Gemisch aus 32,5 g Caesiumhydroxid (217 mmol), 5,4 g Magnesiumspänen (220 mmol) und 300 ml Undecan unter Rühren auf Siedetemperatur (196°C) erhitzt. Sodann werden 1,6 g (22 mmol) tert.-Butanol, gelöst in Undecan, innerhalb von 25 min zugetropft und weitere 13 h unter Rückflußkühlung erhitzt ($H_2$-Entwicklung: 122 mmol). Nach dem Erkalten auf Temperaturen unterhalb des Schmelzpunktes von Caesium wird das Reaktionsgemisch über ein feinmaschiges Sieb gegossen und der silbrigglänzende Caesium-Regulus vom Magnesiumoxid abgetrennt. Nach Filtration des geschmolzenen Caesiums über eine Fritte erhält man das Metall in reiner Form in einer Ausbeute von 11,2 g, entsprechend 39 % der Theorie.

Beispiel 6

Herstellung von metallischem Caesium aus Caesiumalkoxid

In einem Reaktor gemäß Beispiel 1 werden 69,6 g Caesiumhydroxid (443 mmol CsOH, 176 mmol $H_2O$) mit 18,0 g (741 mmol) Magnesiumspänen in 300 ml Dodecan während 1,5 h unter Rühren auf Siedetemperatur (216°C) erhitzt; die $H_2$-Entwicklung aus der Dehydratisierung betrug 180 mmol. Anschließend wird innerhalb von 2 h ein Gemisch aus 33,0 g (445 mmol) tert. Butanol und 50 ml Dodecan zugetropft und danach noch eine weitere Stunde auf Siedetemperatur gehalten. Die hierbei entwickelte $H_2$-Menge betrug 440 mmol entsprechend der Bildung von Caesium-tert.-butylat. Das Reaktionsgemisch, eine graue Suspension, enthält silbrigglänzende Caesiumkügelchen, die durch Umsetzung des Caeisum-tert.-butylat mit dem überschüssigen metallischen Magnesium (122 mmol) entstanden sind. Die auf etwa 20°C erkaltete Reaktionsmischung wird über ein Sieb filtriert und das metallische Caesium abgetrennt. Ausbeute: 11,7 g (88 mmol) = 36 % der Theorie. Das Siebfiltrat wird über eine Fritte filtriert und der Rückstand mehrmals mit Tetrahydrofuran gewaschen. Aus dem Filtrat, das 276 mmol Caesiumbutylat und 84 mmol Magnesiumbutylat enthält, läßt sich durch Umkristallisation aus einem Gemisch von Tetrahydrofuran und Toluol reines Caesiumbutylat gewinnen.

**Patentansprüche**

1. Verfahren zur Herstellung von Alkalimetall durch Reduktion von Alkaliverbindungen mit metallischen Reduktionsmitteln, dadurch gekennzeichnet, daß die Reduktion mit zerteiltem Magnesium in einem bezüglich Alkalimetall inerten organischen Lösungsmittel durchgeführt wird.

2. Verfahren nach Anspruch 1, dadurch gekennzeichnet, daß die Reduktion in Gegenwart eines Alkohols mit insbesondere 3 bis 8 C-Atomen oder dessen Alkalimetallalkoholat als Reaktionsbeschleuniger durchgeführt wird.

3. Verfahren nach den Ansprüchen 1 bis 2, dadurch gekennzeichnet, daß als inertes organisches Lösungsmittel gesättigte aliphatische oder cycloaliphatische Kohlenwasserstoffe mit 8 bis 20 C-Atomen verwendet werden.

4. Verfahren nach den Ansprüchen 1 bis 3, dadurch gekennzeichnet, daß die Reduktion bei Temperaturen von 100 bis 300, vorzugsweise von 150 bis 250°C, vorgenommen werden.

**Claims**

1. A process for producing alkali metal by reduction of alkali compounds with metallic reducing agents, characterised in that the reduction is carried out with particulate magnesium in an organic solvent which is inert to alkali metal.

2. A process according to Claim 1, characterised in that the reduction is carried out in the presence of an alcohol having in paricular 3 to 8 C atoms or the alkali metal alcoholate thereof as a reaction accelerator.

3. A process according to Claims 1 to 2, characterised in that saturated aliphatic or cycloaliphatic hydrocarbons having 8 to 20 C atoms are used as the inert organic solvent.

4. A process according to claims 1 to 3, characterised in that the reduction is performed at temperatures of 100 to 300, preferably 150 to 250°C.

**Revendications**

1. Procédé de préparation de métal alcalin, par réduction de composés de métal alcalin par des agents réducteurs métalliques, caractérisé, en ce qu'il consiste à effectuer la réduction par du magnésium fragmenté dans un solvant organique inerte vis–à–vis du métal alcalin.

2. Procédé suivant la revendication 1, caractérisé en ce qu'il consiste à effectuer la réduction en présence d'un alcool, ayant notamment de 3 à 8 atomes de carbone ou de son alcoolate de métal alcalin, comme accélérateur de réaction.

3. Procédé suivant les revendications 1 à 2, caractérisé en ce qu'il consiste à utiliser comme solvant organique inerte des hydrocarbures aliphatiques ou cycloaliphatiques saturés, ayant de 8 à 20 atomes de carbone.

4. Procédé suivant les revendications 1 à 3, caractérisé en ce qu'il consiste à effectuer la réaction des températures de 100 à 300 et, de préférence, de 150 à 250°C.